# FASCICULE DE BREVET EUROPEEN

(11) **EP 2 729 668 B1**
(45) Date de publication et mention de la délivrance du brevet: **14.01.2015**
(21) Numéro de dépôt: 12743493.4
(22) Date de dépôt: 03.07.2012
(51) Int. Cl.: F01D 25/16, F02C 7/32, F01D 9/06

(54) **DISPOSITIF D'ARBRE D'ENTRAÎNEMENT D'UNE TURBOMACHINE**
ANTRIEBSWELLENVORRICHTUNG FÜR EINEN TURBINENMOTOR
TURBINE ENGINE DRIVE SHAFT DEVICE

(30) Priorité: 04.07.2011 FR 1156010
(43) Date de publication de la demande: 14.05.2014
(73) Titulaire: Snecma, 75015 Paris (FR)
(72) Inventeur: DUCHATELLE, Thierry, François, Maurice, F-77550 Moissy Cramayel Cedex (FR); GUILBERT, Virginie, F-77550 Moissy-cramayel Cedex (FR); MAGRET, Cédric, F-77550 Moissy Cramayel Cedex (FR); PAPIN, Thierry, Georges, Paul, F-77550 Moissy Cramayel Cedex (FR)
(74) Mandataire: Ahner, Philippe
(86) Numéro de dépôt international: PCT/FR2012/051538
(87) Numéro de publication internationale: WO 2013/004964

(56) Documents cités:
- EP-A1- 0 147 351
- EP-A1- 2 045 447
- FR-A1- 2 824 362
- FR-A1- 2 921 423
- GB-A- 926 947
- US-A- 3 907 386

## Description

Le sujet de l'invention présente est un dispositif d'arbre d'entraînement d'une turbomachine.

De tels arbres s'étendent radialement à travers les turbomachines et permettent d'imposer le démarrage de la machine, ou le mouvement d'un autre équipement central, à partir de l'extérieur. Ils traversent les veines d'écoulement des gaz en étant enfermés dans des bras radiaux, qui doivent imposer peu de perturbations à l'écoulement et de pertes de rendement, et aussi être étanches afin d'éviter les fuites de lubrifiant dans l'écoulement. Un palier est souvent disposé autour d'une portion intermédiaire de l'arbre afin de le soutenir. On se reportera aux brevets français 2 824 362 et 2 921 423 pour découvrir quelques conceptions existantes, mais sans rapport avec l'invention, de tels arbres d'entraînement. Une autre conception est le sujet du document GB-A-926 947.

Les stators existants ont souvent une structure unitaire comprenant un carter dit intermédiaire, circulaire, une virole dite extérieure, circulaire et concentrique au carter et l'entourant, et des aubes de redressement de l'écoulement joignant le carter à la virole en étant intégrés d'une pièce avec eux. Des bras radiaux sont disposés de place en place dans le cercle des aubes afin de renforcer la liaison du carter et de la virole et leur sont aussi solidaires ; l'un de ces bras contient l'arbre d'entraînement. Le palier de support de l'arbre est généralement monté sur un support autonome, comprenant une bride de fixation boulonnée à un flasque d'extrémité du carter intermédiaire.

La lubrification d'équipements adjacents à l'arbre, comme le palier, doit être assurée, soit par l'intérieur de l'arbre par centrifugation et agencement de canaux, déflecteurs et écopes de lubrification, soit par une alimentation extérieure. Afin de ne pas disséminer l'huile dans le carter circulaire traversé par l'arbre, des fourreaux cylindriques sont ajoutés autour de l'arbre afin de maintenir l'huile dans un volume qu'ils renferment. On doit toutefois admettre que ces fourreaux représentent une complication de la structure de la machine, et qu'ils imposent une augmentation de la largeur du bras radial pour les y loger, et donc du maître-couple de la section du bras, ce qui nuit à l'écoulement des gaz. Le montage du palier sur un support boulonné au carter introduit aussi des imprécisions de position qui sont nuisibles à un bon alignement de l'arbre. Enfin, le maintien de l'étanchéité entre les alentours lubrifiés de l'arbre et l'extérieur de la roue, et notamment les veines d'écoulement, deviendrait plus difficile si les bras radiaux n'étaient plus d'une pièce avec la virole extérieure et le carter intermédiaire mais assemblés à eux ; cette construction serait pourtant avantageuse, puisqu'elle est moins compliquée à fabriquer que la conception unitaire et permet de remplacer des aubes en cas de besoin.

L'invention est relative à un dispositif d'arbre d'entraînement d'une turbomachine susceptible d'obvier à ces différents inconvénients et qui est notamment compatible avec une construction de la turbomachine où les aubes et les bras radiaux sont assemblés à la virole et au carter après avoir été fabriqués séparément.

Ce bras radial est en principe un profil redresseur situé derrière les aubes de soufflante et intégré au carter intermédiaire ; il est communément appelé « bras-ogv » et intégré mécaniquement au carter intermédiaire.

Il permet d'assurer trois fonctions déjà mentionnées ou révoquées :
- une fonction aérodynamique de redressement ;
- une fonction structurale de tenue du carter intermédiaire et donc de la turbomachine ;
- une fonction d'intégration mécanique qui est la constitution d'un logement pour le palier intermédiaire de l'arbre radial.

Ce « bras-OGV » est étanche pour intégrer le palier intermédiaire de l'arbre de transmission.

Sous une forme générale, l'invention concerne un dispositif d'arbre d'entraînement d'une turbomachine comprenant, outre l'arbre, un carter circulaire, une virole circulaire entourant le carter, un bras radial creux reliant le carter à la virole et traversé par l'arbre, qui s'étend aussi dans le carter, un palier de support de l'arbre monté sur un support fixé au carter, le bras radial étant assemblé au carter sans être d'une pièce avec lui, le bras radial comprenant un bossage pourvu d'un alésage, le dispositif étant caractérisé en ce qu'il comprend un manchon de raccordement du bras au carter, le bossage et le manchon sont assemblés par enfoncement l'un dans l'autre, l'arbre s'étend à travers le bossage et le manchon, un joint établit une étanchéité entre le manchon et le bossage, et le palier est monté dans le manchon.

Le manchon entourant l'arbre d'entraînement ressemble au fourreau de la conception connue, mais il ne s'étend pas dans le bras radial et forme plutôt une pièce de raccordement entre lui et le carter, qui assure l'étanchéité à l'égard de l'extérieur, alors que le raccordement d'après la conception traditionnelle était assuré par une continuité de matière. L'étanchéité procurée par le manchon équipé du joint permet de renoncer à la continuité entre le bras radial et le carter ; l'absence d'un manchon ou d'un fourreau dans le bras radial permet de réduire sa largeur et favorise l'écoulement des gaz autour du bras ; l'utilisation du manchon pour monter le palier constitue enfin un avantage important puisque le manchon est ajusté contre le carter avec une bonne précision à un endroit généralement adjacent à celui du montage du palier et suivant son axe.

Une conception analogue peut avantageusement être proposée de l'autre côté du bras radial : ce dernier est aussi assemblé à la virole sans être d'une pièce avec elle, et le dispositif comprend un autre manchon de raccordement, reliant la virole au bras en établissant une étanchéité, l'arbre traversant ledit autre manchon.

Le bras radial, de même que les aubes de redressement généralement présentes, peut alors être construit indépendamment de la virole et assemblé à elle sans perte d'étanchéité. Le deuxième manchon constitue encore une pièce de raccordement courte entre la virole et le bras-ogv, qui autorise une liberté de positionnement entre la virole exterieure du carter et le bras ogv tout en assurant l'étanchéité de la cavité crée traversée par l'arbre de transmission.

Le manchon (ou les manchons quand ils existent tous les deux) comprend avantageusement deux portées cylindriques respectivement engagées dans un bossage alésé du bras et un bossage alésé appartenant soit un carter soit à la virole, les portées étant en prolongement, des joints d'étanchéité s'étendant autour des portées. L'assemblage est alors particulièrement aisé.

Dans d'autres conceptions, le manchon pourra toutefois être d'une pièce avec le carter.

Le manchon s'étend avantageusement à travers le carter, d'un rayon extérieur à un rayon intérieur de celui-ci, et contribue alors à lui seul à empêcher la dissémination de lubrifiant à l'intérieur du carter. Une construction simple permettant d'obtenir cela existe quand le carter comprend deux bossages alésés en prolongement dans lesquels deux portées cylindriques du manchon sont respectivement engagées, des joints d'étanchéité étant disposés entre les bossages et les portées.

L'invention sera souvent appliquée à des turbomachines à double flux comprenant deux veines d'écoulement concentriques, le carter étant un carter intermédiaire séparant lesdites veines. Le manchon servira alors à relier de façon étanche les cavités traversées par l'arbre d'entraînement dans le bras radial susmentionné (qui traverse la veine secondaire extérieure) et un autre bras radial traversant la veine primaire intérieure.

La lubrification peut avantageusement être assurée par la conduite creusée dans l'arbre, et par des perçages traversant l'arbre en s'étendant du conduit au palier, afin de détourner une partie de l'huile de lubrification au profit du palier.

Selon un autre perfectionnement, l'arbre peut être composé de deux parties unies par des cannelures, dont la lubrification devrait normalement être assurée ; elle peut l'être par des perçages traversant l'arbre et s'étendant du conduit à une chambre circulaire sur laquelle donnent les cannelures.

D'autres aspects de l'invention sont une turbomachine d'aéronef comprenant le dispositif détaillé selon les caractéristiques précédentes, et un aéronef comprenant cette turbomachine.

L'invention sera maintenant décrite en liaison aux figures, dont :
- la figure 1 représente une conception de l'art antérieur ;
- la figure 2 est une vue d'une roue aubagée ;
- la figure 3 est une vue générale d'une réalisation possible de l'invention ;
- les figures 4, 5, 6, 7 et 8 sont des vues de détail de cette réalisation,
- la figure 9 est une variante appartenant à une autre réalisation,
- et la figure 10 illustre encore une autre réalisation.

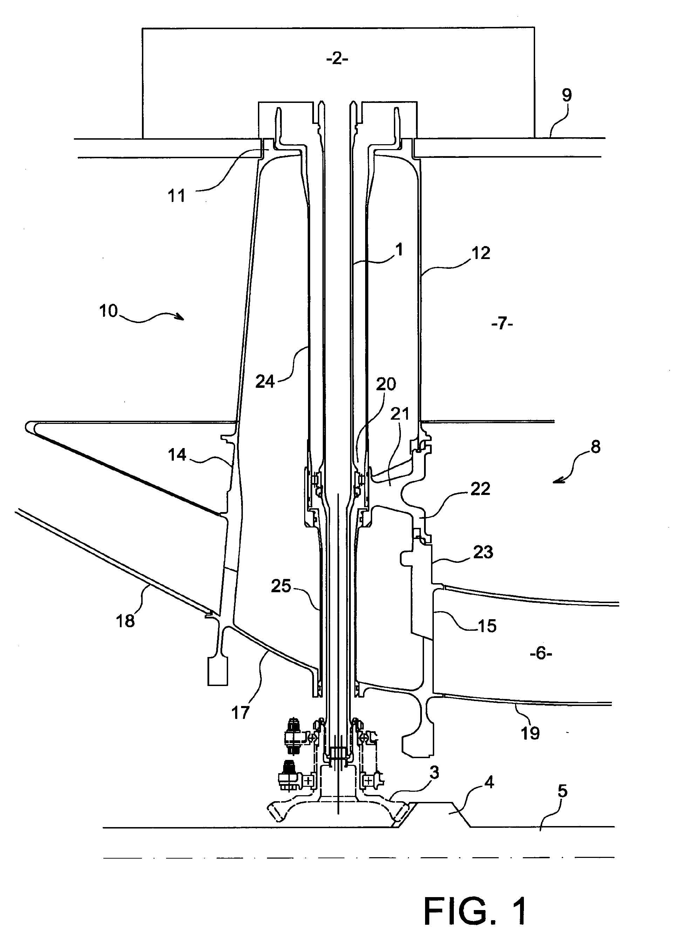

Se reportant à la figure 1, un arbre 1 d'entraînement d'une construction connue s'étend radialement à travers une turbomachine entre un dispositif moteur 2 et réducteur de vitesse et un pignon 3 d'attaque d'une couronne dentée 4 d'un arbre central 5, situé sur l'axe de la machine. La turbomachine ayant ici un écoulement à double flux, l'arbre 1 s'étend à travers une veine primaire 6 de petit rayon et une veine secondaire 7 de grand rayon, en traversant encore un carter intermédiaire 8 qui les sépare jusqu'à un bec de confluence. La veine secondaire 7 est limitée à l'extérieur par une virole extérieure 9, et le dispositif moteur 2 s'étend à l'extérieur d'elle.

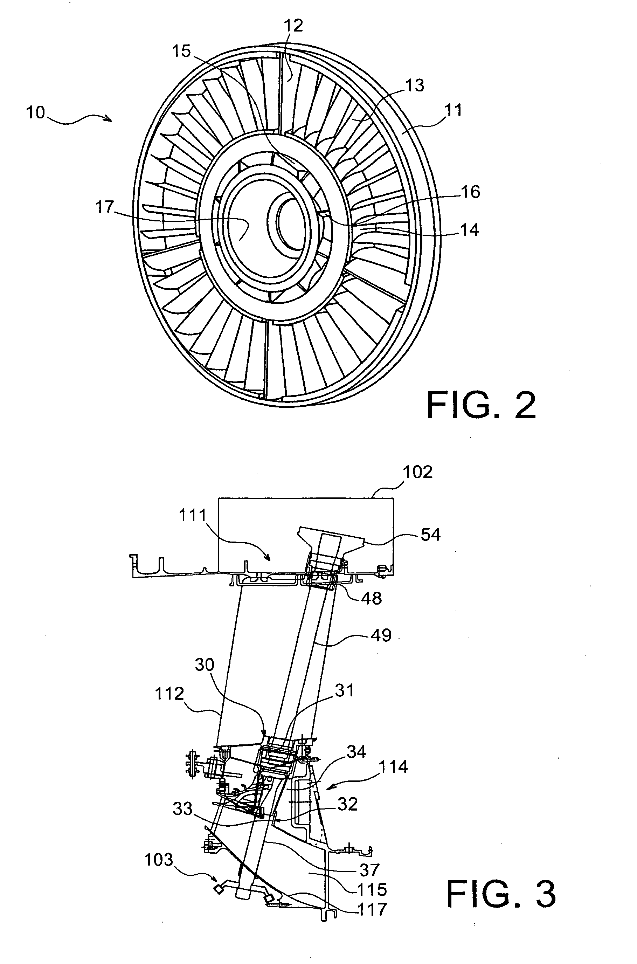

Se reportant aussi à la figure 2, on constate que le stator de la turbomachine comprend une roue aubagée 10 où on trouve de l'extérieur vers l'intérieur une portion 11 de la virole extérieure 9, des bras radiaux 12 et des aubes de redresseur 13 répartis sur un cercle à travers la veine secondaire 7, une portion 14 du carter intermédiaire 8, d'autres bras radiaux 15 et d'autres aubes de redresseur 16 également répartis sur un cercle à travers la veine primaire 6, et une peau interne 17 délimitant le rayon intérieur de la veine primaire 6. La roue aubagée 10 s'étend entre un compresseur à basse pression 18 et un compresseur à haute pression 19. La structure de la roue aubagée 10 est unitaire, tous ses éléments étant fabriqués d'un seul tenant par fonderie. L'arbre 1 s'étend à travers les portions 11, 14 et la peau interne 17, ainsi que dans un des bras radiaux 12 et un des bras radiaux 15, en les traversant encore de part en part. Il est soutenu par un palier 20, situé à l'intérieur de la portion 14 du carter intermédiaire 8 et soutenu par un support 21 muni d'une bride 22 de fixation à un flasque 23 à l'arrière de la portion 14. L'arbre 1 est entouré par un fourreau extérieur 24 s'étendant de la portion 11 de la virole extérieure 9 au support 21 et par un fourreau intérieur 25 s'étendant du support 21 à la peau intérieure 17 et dont chacun s'étend donc surtout dans le bras raidal 12 ou 15. Les fourreaux 24 et 25 délimitent avec le support 21 un volume clos contenant notamment le palier 20, qu'il est ainsi possible de lubrifier sans occasionner une dispersion de l'huile.

Cette conception possède des désavantages déjà signalés et dus à la présence des fourreaux dans les bras radiaux et au genre de support utilisé pour le palier.

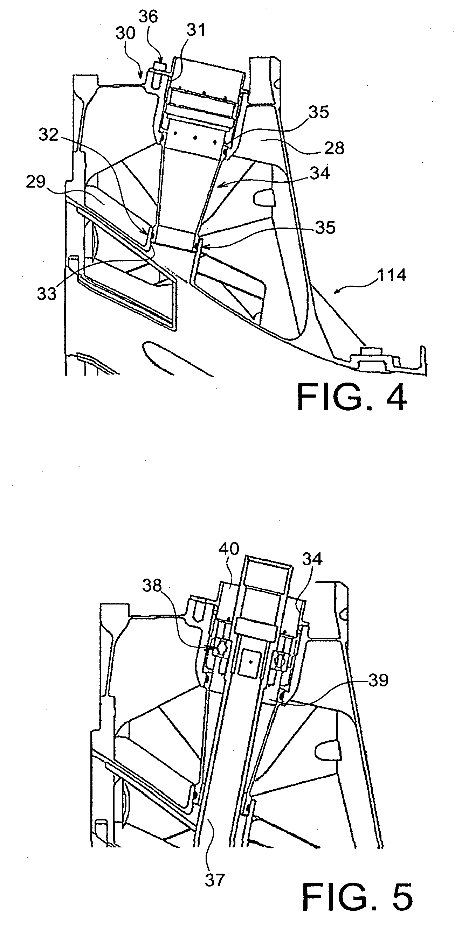

On passe à présent à une description d'une réalisation de l'invention au moyen des figures suivantes, et d'abord des figures 3 et 4.

La roue aubagée 10 unitaire est remplacée par une roue aubagée de forme similaire mais où les aubes de redresseurs et les bras radiaux sont boulonnés aux éléments auxquels ils sont reliés, la portion de carter intermédiaire (maintenant 114) et la portion de virole (maintenant 111) étant désormais fabriquées séparément.

La portion de carter intermédiaire 114 est pourvue d'un bossage 30 à son pourtour extérieur, qui est placé devant un bras radial 112 extérieur. Le bossage 30 comprend un alésage 31 cylindrique. Un autre bossage 32 est disposé devant un bras radial 115 intérieur (traversant la veine primaire 6) qui comprend lui aussi un alésage 33, dans le prolongement de l'alésage 31 précédent. Un manchon 34 est enfoncé dans les alésages 31 et 33, ses extrémités étant des portées cylindriques s'appuyant sur les alésages 31 et 33, pourvues de joints 35 toriques établissant l'étanchéité auxdits alésages 31 et 33. Le manchon 34 est retenu par des boulons 36 engagés dans le bossage 30. Les bossages 30 et 32 sont disposés aux extrémités de la portion de carter intermédiaire 14, en étant soutenus par des nervures 28 et 29. Le bossage 32 intérieur débouche directement dans le bras radial 115 intérieur, qui est d'une pièce avec la portion de carter intermédiaire 114 et avec la peau intérieure 117.

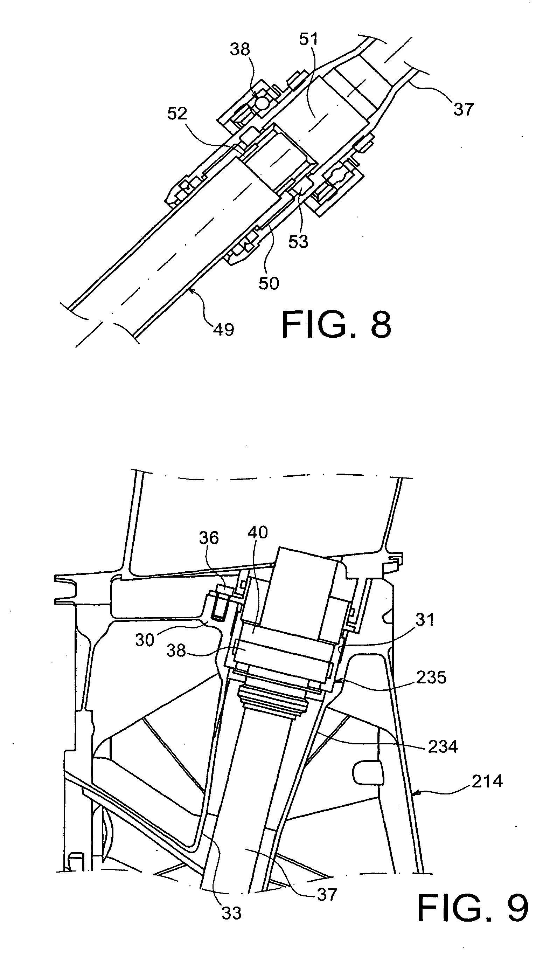

Selon une variante de conception illustrée à la figure 9, la portion intermédiaire de carter, maintenant 214, est construite d'une pièce avec un premier manchon 234, qui prolonge les alésages 31 et 33. Un second manchon 235 est cependant construit séparément et engagé dans l'alésage 31 extérieur, et il est conformé comme le manchon 34 en ce qui concerne la réception du palier 38, la fixation au bossage 30 par des boulons 36 et la présence d'un joint d'étanchéité entre sa portée cylindrique et l'alésage 31.

Les manchons 234 et 235 remplacent donc ensemble le manchon 34, avec les avantages que le second manchon 235, court et maintenu dans un seul alésage 31, est facile à mettre en place, et qu'il n'y a pas de dispositif d'étanchéité pour l'alésage 33 intérieur.

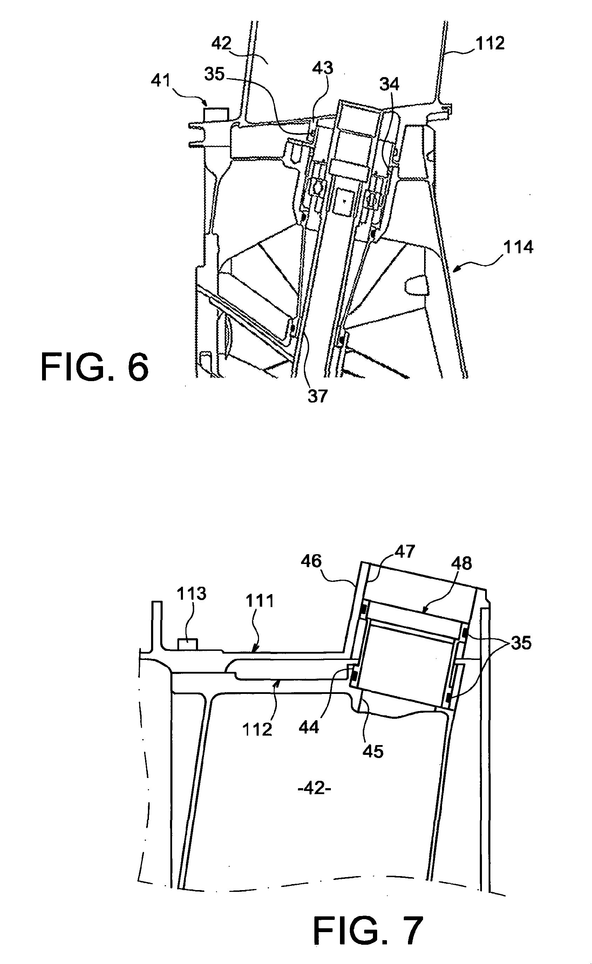

L'arbre d'entraînement comprend deux parties, dont l'une d'entre elles est un arbre primaire 37 qui s'étend dans le manchon 34, puis vers l'intérieur et finit sur le pignon d'attaque, maintenant 103. Un palier 38 (figure 5) est disposé entre l'arbre primaire 37 et le manchon 34 pour soutenir celui-là par celui-ci ; sa bague interne et sa bague externe sont retenues en direction axiale par deux écrous 39 et 40 respectivement vissés sur l'arbre primaire 37 et dans le manchon 34, et elles sont en butée contre des épaulements opposés. Les bras radiaux extérieurs, et les aubes de redresseur de la veine extérieure, construits séparément, sont montés sur l'élément de carter intermédiaire 114 par des boulons 41 (figure 6) (un seul est représenté). Un bout de l'arbre primaire 37 s'étend hors du manchon 34 et dépasse dans une cavité 42 du bras radial 112 extérieur. La face intérieure du bras radial 112 comprend un bossage 43 intérieur alésé qui s'engage sur l'extrémité extérieure du manchon 34, et qui est lui aussi muni d'un joint 35 pour établir l'étanchéité entre eux.

Le bras radial 112 comprend (figure 7) un bossage 44 extérieur, opposé au précédent et lui aussi pourvu d'un alésage 45. Quand l'élément de virole 111 est installé et uni au bras radial 112 par des boulons 113, un bossage 46 qu'il comporte vient s'étendre sur le bossage 44 extérieur et un alésage 47 du bossage 46 prolonge l'alésage 45. Un second manchon 48 est engagé dans les alésages 45 et 47 et possède deux portées cylindriques munies aussi de joints 35 toriques pour établir l'étanchéité contre ces alésages. Cette disposition aux deux manchons relie la cavité 42 du bras radial 112 à l'extérieur de la virole, où se trouve le bloc moteur correspondant au bloc moteur 2, et au volume proche de l'axe de la machine où se trouve le pignon d'attaque 103 sans compromettre l'étanchéité et notamment sans laisser de communication avec les veines d'écoulement des gaz, le manchon 34 reliant la cavité 42 du bras radial 112 extérieur à celle du bras radial 115 intérieur. Un arbre secondaire 49 (figures 3 et 8), composant l'arbre d'entraînement avec l'arbre primaire 37 et s'étendant depuis le bloc extérieur 102, traverse la cavité 42 et s'étend jusqu'au manchon 34, où il se joint à l'arbre primaire 37 par des cannelures 50.

Il est à noter que l'arbre primaire 37 et l'arbre secondaire 49 peuvent être inclinés en direction de l'axe de la machine, ici vers l'arrière en allant vers la périphérie de la machine, et que le bras radial 112 est alors avantageusement incliné d'un angle analogue afin que l'arbre secondaire soit constamment dans une même zone adjacent au bord arrière, plus large, de la cavité 42 et qu'il n'y ait ainsi pas d'obligation d'élargir le bras radial 112 ailleurs.

Un bol de centrage 54 (figure 3) de l'arbre secondaire 49, de conception connue et de forme cylindrique conique, fixé de façon non représentée dans le dispositif moteur 2, est entièrement inclus dans celui-ci, alors que sa partie inférieure pénétrait dans le bras radial 12 selon la conception antérieure. L'addition du second manchon 48 d'étanchéité, qui dispense le bol de centrage 54 de cette fonction d'étanchéité entre le bras radial 12 et le dispositif moteur 102, permet de reprendre les efforts transmis par l'arbre secondaire 49 par le dispositif moteur 102 seul et de soulager ainsi le bras radial 112, sans qu'il soit besoin de le renforcer.

La lubrification du dispositif peut s'effectuer de la façon suivante. De l'huile originaire du bloc moteur 102 est injectée dans un conduit de l'arbre secondaire 49, qui est creux tout comme l'axe primaire 37. En arrivant au bout de l'arbre secondaire 49, l'huile pénètre (figure 8) dans des perçages 51 établis à travers l'arbre primaire 37 devant le palier 38 et lubrifie ce dernier. Une autre portion de l'huile aboutit à des perçages 52 au bout de l'arbre secondaire 49 et contribue à lubrifier les cannelures 50 en atteignant une chambre 53 circulaire située devant elles. L'huile ainsi consommée aboutit dans la cavité fermée entourant l'arbre d'entraînement, où elle ne peut rejoindre l'écoulement dans la machine ni se disperser à l'excès et où il sera possible de la récupérer.

D'autres solutions sont également possibles pour réaliser l'invention, qui peut notamment être mise en oeuvre dans des turbomachines à flux simple.

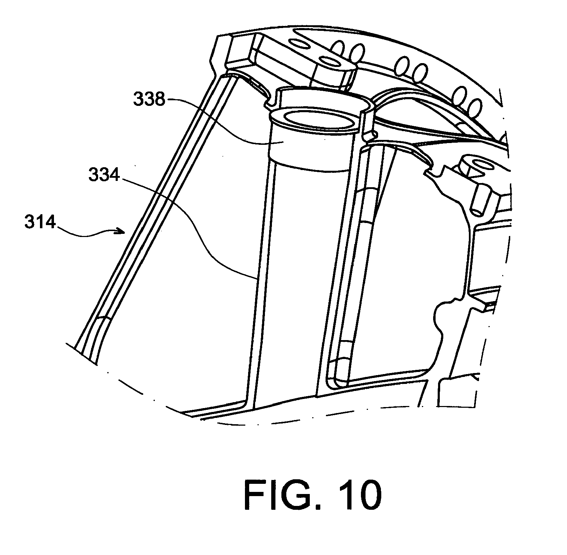

Une de ces solutions est ainsi représentée au moyen de la figure 10. Les manchons de raccordement, qu'on a jusqu'ici considéré comme des pièces indépendantes, peuvent être en réalité solidaires d'autres éléments de l'assemblage. C'est ainsi que le carter, maintenant 314, peut comporter un manchon 334 qui lui est intégré, c'est-à-dire d'une pièce avec lui, et qui s'étend entre les deux veines de l'écoulement de la même façon que le manchon 34 de la réalisation de la figure 4 par exemple.

Un avantage de cette conception est que les joints d'étanchéité qui étaient nécessaires entre le manchon 34 et le carter 114 peuvent ici être omis. Ce mode de réalisation peut par ailleurs être identique au précédent. Une autre variante de réalisation est toutefois envisageable : le palier, maintenant 338, logé au même endroit que le palier 38 de la réalisation précédente, peut être un palier lisse au lieu d'un roulement comme on l'a représenté jusqu'à présent. Cette liberté de choisir le genre du palier se retrouve d'ailleurs dans tous les modes de réalisation de l'invention.

## Revendications

1. Dispositif d'arbre d'entraînement d'une turbomachine comprenant, outre l'arbre (37, 49), un carter (114, 214) circulaire, une virole (111) circulaire entourant le carter, un bras radial (112) creux reliant le carter à la virole et traversé par l'arbre, qui s'étend aussi dans le carter, un palier (38) de support de l'arbre monté sur un support fixé au carter, le bras radial (112) étant assemblé au carter (114, 214) sans être d'une pièce avec lui, le bras radial comprenant un bossage (30) pourvu d'un alésage, le dispositif étant **caractérisé en ce qu'**il comprend un manchon (34, 235) de raccordement du bras au carter, le bossage et le manchon sont assemblés par enfoncement l'un dans l'autre, l'arbre s'étend à travers le bossage et le manchon, un joint (35) établit une étanchéité entre le manchon et le bossage, et le palier est monté dans le manchon.

2. Dispositif d'arbre d'entraînement d'une turbomachine suivant la revendication 1, **caractérisé en ce que** le manchon est d'une pièce avec le carter.

3. Dispositif d'arbre d'entraînement d'une turbomachine suivant la revendication 1, **caractérisé en ce que** le manchon est assemblé à un bossage du carter, le bossage du carter est pourvu d'un alésage à travers lequel l'arbre s'étend, le bossage du carter et le manchon sont enfoncés l'un dans l'autre, et un joint établit une étanchéité entre le manchon et le bossage du carter.

4. Dispositif d'arbre d'entraînement d'une turbomachine suivant la revendication 1, 2 ou 3, **caractérisé en ce que** le bras radial (112) est aussi assemblé à la virole (111) sans être d'une pièce avec elle, le bras radial et la virole comprennent d'autres bossages (44, 46) pourvus d'alésages (45, 47) en prolongement et le dispositif comprend un autre manchon de raccordement (48), reliant la virole au bras en étant engagé dans les alésages desdits autres bossages, d'autres joints (35) établissant une étanchéité entre l'autre manchon et chacun des alésages desdits autres bossages, l'arbre traversant ledit autre manchon.

5. Dispositif d'arbre d'entraînement d'une turbomachine suivant l'une quelconque des revendications 1 à 4, **caractérisé en ce que** le palier est retenu contre des épaulements opposés du manchon et de l'arbre par des écrous (39, 40) respectivement vissés sur l'arbre et dans le manchon.

6. Dispositif d'arbre d'entraînement de turbomachine suivant la revendication 1, **caractérisé en ce que** le manchon (34) s'étend à travers le carter (114) d'un rayon extérieur à un rayon intérieur, et le carter comprend un second bossage (32) alésé en prolongement dudit bossage (30), le manchon (34) étant engagé à travers lesdits bossages, un joint (35) d'étanchéité étant disposé entre le second bossage et le manchon.

7. Dispositif d'arbre d'entraînement de turbomachine suivant la revendication 1, **caractérisé en ce que** le carter comprend un manchon de carter (234) construit d'une pièce avec lui et qui prolonge l'alésage (31) du bossage (30) du carter et un alésage (33) d'un second bossage (32), ledit bossage et ledit second bossage étant à un rayons extérieur et à un rayon intérieur du carter, et le manchon (235) est engagé dans le manchon de carter (234).

8. Dispositif d'arbre d'entraînement de turbomachine suivant la revendication 6 ou 7, **caractérisé en ce que** le carter est un carter intermédiaire séparant deux veines (6, 7) concentriques d'écoulement de gaz, le bras radial (112) traverse une veine secondaire extérieure, et le second bossage (32) s'étend jusqu'à un autre bras radial (115) traversant une veine primaire intérieure.

9. Dispositif d'arbre d'entraînement de turbomachine suivant l'une quelconque des revendications 1 à 8, **caractérisé en ce qu'**il comprend un conduit de lubrification creusé dans l'arbre, des perçages (51) traversant l'arbre du conduit au palier (35), et l'arbre est composé de deux parties (37, 49) unies par des cannelures (50), et des perçages (52) traversent l'arbre du conduit à une chambre circulaire (53) sur laquelle donnent les cannelures.

10. Dispositif d'arbre d'entraînement de turbomachine suivant l'une quelconque des revendications 1 à 9, **caractérisé en ce que** l'arbre est incliné en direction axiale de la turbomachine et le bras radial (112) est aussi incliné dans la direction axiale, en étant constamment adjacent à un bord arrière du bras radial.

11. Turbomachine, **caractérisée en ce qu'**elle comprend un dispositif suivant l'une quelconque des revendications précédentes.

12. Aéronef, **caractérisé en ce qu'**il comprend une turbomachine suivant la revendication 11.

## Patentansprüche

1. Antriebswellenvorrichtung einer Turbomaschine, umfassend, außer der Welle (37, 49), ein kreisförmiges Gehäuse (114, 214), einen das Gehäuse umschließenden kreisförmigen Ring (111), einen das Gehäuse mit dem Ring verbindenden und von der Welle durchgriffenen hohlen Radialarm (112), der sich auch in das Gehäuse erstreckt, ein Lager (38) zum Tragen der Welle, das an einem an dem Gehäuse befestigten Halter angebracht ist, wobei der Radialarm (112) mit dem Gehäuse (114, 214) verbunden ist, ohne mit ihm einstückig ausgebildet zu sein, wobei der Radialarm einen mit einer Bohrung versehenen Vorsprung (30) umfasst, wobei die Vorrichtung **dadurch gekennzeichnet ist, dass** sie eine Muffe (34, 235) zum Verbinden des Arms mit dem Gehäuse umfasst, der Vorsprung und die Muffe durch Ineinanderdrücken verbunden sind, die Welle sich durch den Vorsprung und die Muffe erstreckt, eine Dichtung (35) zwischen der Muffe und dem Vorsprung eine Dichtigkeit herstellt und das Lager in der Muffe angebracht ist.

2. Antriebswellenvorrichtung einer Turbomaschine nach Anspruch 1, **dadurch gekennzeichnet, dass** die Muffe mit dem Gehäuse einstückig ausgebildet ist.

3. Antriebswellenvorrichtung einer Turbomaschine nach Anspruch 1, **dadurch gekennzeichnet, dass** die Muffe mit einem Vorsprung des Gehäuses verbunden ist, der Vorsprung des Gehäuses mit einer Bohrung versehen ist, durch die sich die Welle erstreckt, der Vorsprung des Gehäuses und die Muffe ineinander gedrückt sind und eine Dichtung zwischen der Muffe und dem Vorsprung des Gehäuses eine Dichtigkeit herstellt.

4. Antriebswellenvorrichtung einer Turbomaschine nach Anspruch 1, 2 oder 3, **dadurch gekennzeichnet, dass** der Radialarm (112) auch mit dem Ring (111) verbunden ist, ohne mit diesem einstückig ausgebildet zu sein, der Radialarm und der Ring weitere Vorsprünge (44, 46), die mit Bohrungen (45, 47) versehen sind, in der Verlängerung umfassen und die Vorrichtung eine weitere Verbindungsmuffe (48) umfasst, welche den Ring mit dem Arm verbindet, indem sie in die Bohrungen der weiteren Vorsprünge eingesteckt ist, wobei weitere Dichtungen (35) zwischen der weiteren Muffe und jeder der Bohrungen der weiteren Vorsprünge eine Dichtigkeit herstellen, wobei die Welle die weitere Muffe durchgreift.

5. Antriebswellenvorrichtung einer Turbomaschine nach einem der Ansprüche 1 bis 4, **dadurch gekennzeichnet, dass** das Lager an gegenüberliegenden Schultern der Muffe und der Welle durch Muttern (39, 40), die auf die Welle bzw. in die Muffe geschraubt sind, gehalten ist.

6. Antriebswellenvorrichtung einer Turbomaschine nach Anspruch 1, **dadurch gekennzeichnet, dass** die Muffe (34) sich durch das Gehäuse (114) von einem Außenradius zu einem Innenradius erstreckt und das Gehäuse einen ausgebohrten zweiten Vorsprung (32) in der Verlängerung des Vorsprungs (30) umfasst, wobei die Muffe (34) durch die Vorsprünge gesteckt ist, wobei eine Dichtung (35) zwischen dem zweiten Vorsprung und der Muffe angeordnet ist.

7. Antriebswellenvorrichtung einer Turbomaschine nach Anspruch 1, **dadurch gekennzeichnet, dass** das Gehäuse eine Gehäusemuffe (234) umfasst, die mit ihm einstückig ausgebildet ist und die die Bohrung (31) des Vorsprungs (30) des Gehäuses und eine Bohrung (33) eines zweiten Vorsprungs (32) fortsetzt, wobei der Vorsprung und der zweite Vorsprung an einem Außenradius und an einem Innenradius des Gehäuses gelegen sind, und die Muffe (235) in die Gehäusemuffe (234) eingesteckt ist.

8. Antriebswellenvorrichtung einer Turbomaschine nach Anspruch 6 oder 7, **dadurch gekennzeichnet, dass** das Gehäuse ein Zwischengehäuse ist, das zwei konzentrische Gasströmungskanäle (6, 7) trennt, der Radialarm (112) einen äußeren Sekundärkanal durchgreift und der zweite Vorsprung (32) sich bis zu einem weiteren Radialarm (115), der einen inneren Primärkanal durchgreift, erstreckt.

9. Antriebswellenvorrichtung einer Turbomaschine nach einem der Ansprüche 1 bis 8, **dadurch gekennzeichnet, dass** sie eine in die Welle gebohrte Schmierleitung umfasst, wobei Bohrungen (51) die Welle von der Leitung zu dem Lager (35) durchqueren, und die Welle aus zwei durch Rillen (50) verbundenen Teilen (37, 49) besteht und Bohrungen (52) die Welle von der Leitung zu einer kreisförmigen Kammer (53), zu der die Nuten gehen, durchqueren.

10. Antriebswellenvorrichtung einer Turbomaschine nach einem der Ansprüche 1 bis 9, **dadurch gekennzeichnet, dass** die Welle in axialer Richtung der Turbomaschine geneigt ist und der Radialarm (112) auch in der axialen Richtung geneigt ist, dabei stets an einem hinteren Rand des Radialarms anliegend.

11. Turbomaschine, **dadurch gekennzeichnet, dass** sie eine Vorrichtung nach einem der vorhergehenden Ansprüche umfasst.

12. Luftfahrzeug, **dadurch gekennzeichnet, dass** es eine Turbomaschine nach Anspruch 11 umfasst.

## Claims

1. Turbine engine drive shaft device comprising, besides the shaft (37, 49), a circular casing (114, 214), a circular ferrule (111) encompassing the casing, a hollow radial arm (112) connecting the casing to the ferrule and traversed by the shaft, also extending into the casing, a shaft support bearing (38) mounted on a supporting member secured on the casing, the radial arm (112) being assembled with the casing (114, 214) without being integral therewith, the radial arm comprising a boss (30) provided with a borehole, the device being **characterised in that** it comprises a sleeve (34, 235) for coupling the arm with the casing, the boss and the sleeve are assembled by engaging into each other, the shaft extends through the boss and the sleeve, a seal (35) creates tightness between the sleeve and the boss, and the bearing is mounted in the sleeve.

2. Turbine engine drive shaft device according to claim 1, **characterised in that** the sleeve is integral with the casing.

3. Turbine engine drive shaft device according to claim 1, **characterised in that** the sleeve is assembled with a boss of the casing, the boss of the casing is provided with a borehole through which the shaft extends, the boss of the casing and the sleeve are engaged into each other, and a seal creates tightness between the sleeve and the boss of the casing.

4. Turbine engine drive shaft device according to claim 1, 2 or 3, **characterised in that** the radial arm (112) is also assembled with the ferrule (111) without being integral therewith, the radial and the ferrule comprise further bosses (44, 46) provided with extending boreholes (45, 47) and the device comprises a further coupling sleeve (48), connecting the ferrule to the arm while being engaged in the boreholes of said further bosses, further seals (35) creating tightness between the further sleeve and each of the boreholes of said further bosses, the shaft passing through said further sleeve.

5. Turbine engine drive shaft device according to any of claims 1 to 4, **characterised in that** the bearing is held against opposite shoulders of the sleeve and the shaft by nuts (39, 40) respectively screwed on the shaft and in the sleeve.

6. Turbine engine drive shaft device according to claim 1, **characterised in that** the sleeve (34) extends through the casing (114) from an outer radius to an inner radius, and the casing comprises a second bored boss (32) extending from said boss (30), the sleeve (34) being inserted through said bosses, a seal (35) being arranged between the second boss and the sleeve.

7. Turbine engine drive shaft device according to claim 1, **characterised in that** the casing comprises a casing sleeve (234) integral therewith and extending from the borehole (31) of the boss (30) of the casing and a borehole (33) of a second boss (32), said boss and said second boss being at an outer radius and at an inner radius of the casing, and the sleeve (235) is inserted into the casing sleeve (234).

8. Turbine engine drive shaft device according to claim 6 or 7, **characterised in that** the casing is an intermediate casing separating two concentric gas flow passages (6, 7), the radial arm (112) passes through an outer secondary passage, and the second boss (32) extends as far as a further radial arm (115) traversing an inner primary passage.

9. Turbine engine drive shaft device according to any of claims 1 to 8, **characterised in that** it comprises a lubrication conduit created in the shaft, drilled holes (51) traversing the shaft from the conduit to the bearing (35), and the shaft consists of two parts (37, 49) joined by grooves (50), and drilled holes (52) traverse the shaft from the conduit to a circular chamber (53) where the grooves lead.

10. Turbine engine drive shaft device according to any of claims 1 to 9, **characterised in that** the shaft is inclined in the axial direction of the turbine engine and the radial arm (112) is also inclined in the axial direction, while being constantly adjacent to a rear edge of the radial arm.

11. Turbine engine, **characterised in that** it comprises a device according to any of the above claims.

12. Aircraft, **characterised in that** it comprises a turbine engine according to claim 11.
